# EUROPÄISCHE PATENTSCHRIFT

(11) **EP 1 785 298 B1**
(45) Veröffentlichungstag und Bekanntmachung des Hinweises auf die Patenterteilung: **17.12.2008**
(21) Anmeldenummer: 06021609.0
(22) Anmeldetag: 16.10.2006
(51) Int. Cl.: B60H 1/34

(54) **Luftausströmer**
Air nozzle
Buse d'air

(30) Priorität: 11.11.2005 DE 102005054295
(43) Veröffentlichungstag der Anmeldung: 16.05.2007
(73) Patentinhaber: Behr GmbH & Co. KG, 70469 Stuttgart (DE)
(72) Erfinder: Augustin, Kai, Dr.-Ing., 70771 Leinfelden (DE); Benamira, Salah, Dipl.-Ing., 70180 Stuttgart (DE)

(56) Entgegenhaltungen:
- WO-A-20/05016673
- WO-A-20/05068233
- FR-A1- 2 835 219

## Beschreibung

Die Erfindung betrifft einen Luftausströmer, insbesondere für ein Kraftfahrzeug, gemäß dem Oberbegriff des Anspruchs 1.

Derartige Luftausströmer dienen der Steigerung des Komfortempfindens des Insassen im Fahrzeuginnenraum, indem beispielsweise in bestimmten Situationen eine zugfreie Strömung aus den Luftausströmer gewünscht wird. Hierzu ist es bekannt, indirekte Luftausströmer vorzusehen, die eine Zugfreiheit sicherstellen. Nachteilig dabei ist, dass die indirekte Luftströmung uneffektiv an den Fahrgästen vorbeiströmt. Die Zeit bis eine Wirkung der Luftströmung fühlbar ist, dauert relativ lang, da die Strömung im hinteren Teil des Fahrzeuginnenraums direkt wieder ausfließt.

Darüber hinaus ist es bekannt, bei einem Luftausströmer für eine diffuse Luftausströmung am Austrittsrand einen Diffusor vorzusehen, wodurch die Geschwindigkeit sich stark verlangsamt und die Luftströmung mit einem großen Aufspreizwinkel ausströmt. Der kühlende Effekt ist relativ schwach, da durch den Unterdruck in der Diffusorquerschnittsmitte, die Strömung von au-βen nach innen zurückströmt, wodurch die Eindringtiefe in den Fahrzeuginnenraum begrenzt ist.

Des Weiteren ist es bekannt, eine Vielzahl von kleinen Düsen vorzusehen, wodurch der Luftstrom zunächst aufgeteilt wird, um dann gleichmäßig und großflächig in den Fahrzeuginnenraum zu strömen. Nachteilig dabei ist der hohe Druckverlust, welcher durch die Aufteilungen der Strömung auf die vielen kleinen Düsen verursacht wird. Darüber hinaus ist ein derartiger mehrdüsiger Luftausströmer sehr aufwendig in der Herstellung, da einerseits Düsen und Kanälen in die Armaturen eingebaut werden müssen und zudem der Druckverlust in allen einzelnen Düsen exakt ausgelegt werden muss. Andererseits kann die Luftströmung nicht aktiv vom Bediener gelenkt werden, da es sich um stationäre Ausströmer handelt. Um die für ein hohes Komfortempfinden erforderlichen weiteren Klimabetriebsfälle erfüllen zu können, sind in dieser Ausführungsform weitere herkömmliche Düsen erforderlich.

Aus der DE 10 2004 038 016 A1 ist ein weiterer Luftausströmer zur Innenbelüftung von Räumen, wie Fahrgasträumen von Straßen- oder Schienenfahrzeugen, bekannt, der in einem ersten Betriebsfall einen gerichteten, strahlförmigen Luftaustritt ("Spotförmiger Luftaustritt") mit großer Eindringtiefe und in einem zweiten Betriebsfall einen diffusen Luftaustritt mit möglichst weit aufgefächertem Luftstrahl sowie beliebige, stetig zwischen diesen beiden Betriebsfällen einstellbare Mischbetriebsfälle ermöglicht, so dass sowohl eine schnelle Durchmischung der Raumluft als auch eine gleichmäßige, zugluftfreie Belüftung möglich ist. Der gerichtete, strahlförmige Luftaustritt wird mit einer möglichst turbulenzarmen, gleichförmig gerichteten Rohrströmung, der diffuse Luftaustritt hingegen mittels Impulstransport in normaler Richtung zur Strahlachse durch verstärkte Turbulenz und/oder Drall unter Zuhilfenahme von Luftleitblechen oder Luftleitelementen erreicht. Beim genannten Luftausströmer werden diese Strömungen in getrennten Luftkanälen für die unterschiedlichen Betriebsfälle geführt. Um jeweils einen von zwei zueinander parallel liegenden zylinderförmigen Teilkanäle ist dabei ein weiterer Teilkanal konzentrisch angeordnet, wobei die Luftströmung in den äußeren Teilkanälen jeweils durch Leiteinrichtungen mit Drall beaufschlagt wird; während die Luftströmung in den inneren Kanälen direkt austritt. Die Luftströme der einzelnen Teilkanäle sind dabei unabhängig voneinander steuerbar. Die genannte Bauform bedingt einen Luftaustritt aus zwei nebeneinander liegenden kreisrunden Austrittsflächen, die zusammen jedoch eine grob angenähert rechteckige oder eine vom Fahrzeughersteller aus Designgründen vorgegebene Fläche einnehmen, der durch die zwei kreisrunden Austrittsflächen nicht optimal ausgenutzt wird, so dass sich hier im Vergleich mit der Nutzung des gesamten rechteckigen Querschnitts höhere Strömungsgeschwindigkeiten und damit mehr Druckabfall ergeben.

Aus der gattungsgemäße WO 2005/068233 ist weiterhin ein Luftausströmer mit mindestens einem Luftführungskanal zum Führen eines Luftstroms vorgesehen, der mindestens zwei, parallel zueinander angeordnete Teilkanäle umfasst, wobei einer der Teilkanäle als äußerer Teilkanal um einen inneren Teilkanal angeordnet ist und der äu-ßere Teilkanal strömungsausgangsseitig mit mindestens einer eine Verdrallung des ausströmenden Luftstroms bewirkenden Luftleiteinrichtung versehen ist, die zumindest einen ersten Schaufelkranz und in Strömungsrichtung entlang der Längsachse des äußeren Teilkanals nachgeordnet, einen zweiten Schaufelkranz umfasst.

Der Erfindung liegt die Aufgabe zugrunde, einen verbesserten Luftausströmer zur Verfügung zu stellen. Des Weiteren ist ein besonders einfaches Verfahren zur Steuerung eines Luftstroms durch den erfindungsgemäßen Luftausströmer anzugeben.

Diese Aufgabe wird erfindungsgemäß gelöst durch einen Luftausströmer mit den Merkmalen des Anspruchs 1. Hinsichtlich des Verfahrens wird die Aufgabe erfindungsgemäß gelöst durch die Merkmale des Anspruchs 16. Vorteilhafte Ausgestaltungen der Erfindung sind Gegenstand der Unteransprüche.

Erfindungsgemäß weist der zweite Schaufelkranz eine Anzahl von wendel- oder Spiralförming und parallel zueinander verlaufenden Schaufeln auf, deren Außenabmessungen in Strömungsrichtung gesehen zunehmen.

Je nach Art und Aufbau sowie Funktion des Luftausströmers kann die Luftleiteinrichtung mehrteilig ausgebildet sein. In einer weiteren Variante können die Schaufelkränze auch integriert, einteilig und/oder einstückig ausgebildet sein.

In einer bevorzugten Ausführungsform ist ein erster Schaufelkranz vorgesehen ist, der eine Anzahl wendel- oder spiralförmig und parallel zueinander verlaufenden Schaufeln (auch Einzelstränge genannt) aufweist, die wendel- oder spiralförmig verlaufen. Bevorzugt ist eine Anzahl von 1 bis 30, besonders bevorzugt von 3 bis 15, insbesondere 5 bis 10 Schaufeln vorgesehen. Eine derartige wendel- oder spiralförmige Schaufel dient der Verdrallung des Luftstroms und somit einem diffusen Luftaustritt. Je nach Vorgabe kann der jeweilige Schaufelkranz aus einem einzelnen Strang oder einer einzelnen spiralförmig verlaufenden Schaufel gebildet sein. Diese Ausführung wird auch Einfach-Helix genannt. Alternativ kann die Luftleiteinrichtung als ein Zweifach-Helix oder ein Mehrfach-Helix gebildet sein.

Zum Schließen und Öffnen des äußeren Teilkanals kann eine Blende zum Schließen und Öffnen der Öffnungen zwischen den Schaufeln des zweiten Schaufelkranzes vorgesehen sein. Bevorzugt ist die Blende als ein einziges Element, z. B. als ein Spritzgussteil, gebildet. Vorteilhafterweise ist die Blende drehbar gelagert auf dem zweiten Schaufelkranz angeordnet, wobei durch Drehen der Blende die Öffnungen zwischen den Schaufeln des zweiten Schaufelkranzes und somit des äußeren Teilkanals geschlossen werden.

Zur Verlängerung des Drall- oder äußeren Teilkanals weist der zweite Schaufelkranz eine der Schaufelanzahl des ersten Schaufelkranzes entsprechende Anzahl von Schaufeln auf, wobei die jeweiligen Schaufeln an der benachbarten Grenze vom ersten Schaufelkranz zum zweiten Schaufelkranz aneinander anliegen. Bei einer Helix-Ausführung der Luftleiteinrichtung weisen sowohl der erste Schaufelkranz als auch der zweite Schaufelkranz eine entsprechende Anzahl von spiralförmigen Einzelsträngen (ein Einzelstrang = Einfach-Helix, zwei Einzelstränge = Zweifach-Helix, usw.) auf. Auch sind die Anzahl an Einzelsträngen, der Umschlingungswinkel der Einzelstränge, die Steigung der Einzelstränge einstellbar.

In einer vorteilhaften Ausführungsform ist der zweite Schaufelkranz als ein separater Erweiterungskanal ausgebildet, der auf dem Luftführungskanal beweglich, insbesondere drehbar angeordnet ist. Insbesondere bei einem zweiten Schaufelkranz mit Schaufeln, deren Dicke in Strömungsrichtung gesehen zunimmt, kann durch Drehen des zweiten Schaufelkranzes der äußere Teilkanal vollständig geöffnet oder vollständig geschlossen werden. Mit anderen Worten: Der zweite Schaufelkranz ist zwischen einer den äußeren Teilkanal vollständig verschließenden Stellung und einer den äußeren Teilkanal vollständig öffnenden Stellung oder in eine beliebige Zwischenstellung drehbar.

Für eine Steuerung und Einstellung des Grades des diffusen Luftaustritts, d.h. Luftmenge, Stärke und Verdrallung des Luftstroms im äußeren Teilkanal, umfasst der jeweilige Schaufelkranz vorzugsweise eine vorgegebene Anzahl von festen oder in ihrer Position verstellbaren Schaufeln. Mit anderen Worten: Der Schaufelkranz weist stationäre und teilstationäre Schaufeln auf, die durch Änderung der Position den Grad der Verdrallung und die durchzufließende Luftstrommenge steuern.

Je nach Art und Funktion des Luftausströmers kann dieser einen oder mehrere Luftführungskanäle umfassen, die parallel zueinander angeordnet sind.

Dabei ist der jeweilige Luftführungskanal in mindestens zwei Teilkanäle aufgeteilt - einen äußeren und einen inneren Teilkanal. Dabei ist vorzugsweise einer der Teilkanäle um einen anderen, bevorzugt zylinderförmigen Teilkanal herum angeordnet, insbesondere konzentrisch in Art eines Ringkanals hierzu. Im jeweiligen äußeren ringförmigen Teilkanal ist strömungsausgangsseitig ein zugehöriger Schaufelkranz vorgesehen, deren Schaufeln synchron oder asynchron hinsichtlich ihrer Stellung steuerbar sind. Auf diese Weise ist es möglich, im inneren Teilkanal einen geradlinigen Luftstrom für einen spotförmigen Luftaustritt und im äußeren Teilkanal einen mit Drall behafteten Luftstrom für einen diffusen Luftaustritt zu führen. Dabei kann der diffuse Luftaustritt hinsichtlich des Turbulenzgrades und der Luftstrommenge durch Verstellung der Schaufeln des Schaufelkranzes gesteuert werden. Alternativ oder zusätzlich zum Schaufelkranz kann die Luftleiteinrichtung wendelartig oder spiralförmig ausgeführt sein.

Zweckmäßigerweise sind die Luftleiteinrichtungen und der Schaufelkranz in den Teilkanälen aus Blech, Kunststoff oder Gummi gebildet. Dies ermöglicht eine einfache und flexible Montage. Zudem können die Luftleiteinrichtungen eine beliebige, insbesondere eine vorgegebene Strömungscharakteristik entsprechende Form, z. B. Wendelform, Spiralform, aufweisen.

Für die Zuführung der Luftströme in die Teilkanäle ist bevorzugt strömungseingangsseitig im oder vor dem Luftführungskanal eine Dosiervorrichtung vorgesehen. Zum separaten oder gemeinsamen Öffnen und Schließen der Teilkanäle können darüber hinaus mehrere Luftklappen vorgesehen sein.

Die Richtung der ausströmenden Luft kann vorteilhafterweise mit einer Vorrichtung zur Einstellung der Richtung des Luftstroms beeinflusst werden. Diese Vorrichtung ist strömungsausgangsseitig im Luftführungskanal angeordnet. Beispielsweise ist diese in Lamellenform ausgeführt. Auch kann diese Vorrichtung ein oder mehrere Klappen zum gemeinsamen oder separaten Öffnen oder Schließen der Teilkanäle aufweisen.

Beim Verfahren zur Steuerung der Luftströmung eines erfindungsgemäßen Luftausströmers umfasst der Luftführungskanal mindestens zwei Teilkanäle, wobei durch einen inneren Teilkanal der Luftstrom gleichförmig gerichtet und strahlförmig und durch den äußeren Teilkanal verdrallt oder mit Turbulenzen behaftet geführt wird. Hierzu wird der Luftstrom in Querrichtung zur Längsachse des Luftführungskanals umgelenkt, so dass sich die Luftströmung verdrallt.

Zur Erzeugung einer Verdrallung des Luftstroms im äußeren Teilkanal sind in diesem in Strömungsrichtung gesehen mindestens zwei als Schaufelkränze ausgebildete Luftleiteinrichtungen vorgesehen, wobei eine Blende, die als ein separates drehbares Bauteil gebildet ist, in eine den äußeren Teilkanal vollständig öffnenden und in eine den äußeren Teilkanal vollständig schließenden Stellung oder in eine beliebige Zwischenstellung gebracht wird.

Vorzugsweise umfasst der Luftführungskanal mindestens zwei Teilkanäle, wobei durch den inneren Teilkanal der Luftstrom gleichförmig gerichtet, strahlförmig und durch den äußeren Teilkanal verdrallt oder mit Turbulenzen behaftet geführt wird.

Darüber hinaus sind strömungsausgangsseitig eine erste Luftklappe für einen ersten Teilkanal und eine zweite Luftklappe für einen zweiten Teilkanal vorgesehen, wobei die erste und die zweite Luftklappe mittels einer Steuereinrichtung wechselseitig geöffnet und geschlossen werden. Bevorzugt werden dabei wechselseitig zumindest der erste Teilkanal für diffusen Luftaustritt und der zweite Teilkanal für spotförmigen Luftaustritt geschlossen und/oder geöffnet oder teilweise geöffnet und teilweise geschlossen. Dadurch kann es zu einer wechselseitigen Ausströmung von diffuser Luft und spotförmig ausströmender Luft oder einer Mischung aus beiden kommen. Dies wird von einem Fahrzeuginsassen als Luftfächeln wahrgenommen und kann zur Komfortsteigerung, insbesondere bei hohen Fahrzeuginnenraumtemperaturen beitragen.

Ausführungsbeispiele der Erfindung werden anhand einer Zeichnung näher erläutert. Darin zeigen:
- Fig. 1: schematisch einen Querschnitt durch einen Luftausströmer mit einem Luftführungskanal, aufgeteilt in einen inneren Teilkanal für einen spotförmigen und einen äußeren Teilkanal für einen diffusen Luftaustritt,
- Fig. 2: schematisch einen Querschnitt durch einen Luftausströmer mit zwei Luftführungskanälen,
- Fig. 3 und 4: perspektivische Ansichten eines Luftausströmers gemäß Fig. 2 mit zusätzlichen Luftleiteinrichtungen in den Hohlräumen,
- Fig. 5: eine perspektivische Ansicht eines Schaufelkranzes als einteilige Luftleiteinrichtung in einem äußeren Teilkanal eines Luftführungskanals,
- Fig. 6: eine perspektivische Ansicht einer mehrteiligen Luftleiteinrichtung mit zwei Schaufelkränzen für einen äußeren Teilkanal eines Luftführungskanals,
- Fig. 7 bis 9: eine perspektivische Ansicht einer mehrteiligen Luftleiteinrichtung mit zwei Schaufelkränzen in der Betriebsstellung offen (= diffuser Luftaustritt) bzw. geschlossen (= spotförmiger Luftaustritt) bzw. mit einer Blende verschlossen,
- Fig. 10 und 11 1: eine Vorderansicht verschiedener Ausführungsformen für einen Luftausströmer mit unterschiedlichen Außenformen,
- Fig. 12: eine Vorderansicht eines Luftausströmers gemäß Fig. 3 mit als Schaufelkränze ausgeführten Luftleiteinrichtungen in den beiden äußeren Teilkanälen und einer lamellenförmigen Vorrichtung zur Einstellung der Richtung des Luftstromes,
- Fig. 13: eine perspektivische Ansicht eines Luftausströmers gemäß Fig. 3 mit einer Dosiervorrichtung für die in die Teilkanäle zuführenden Luftströme in Explosionsdarstellung,
- Fig. 14: eine perspektivische Ansicht eines Luftausströmers gemäß Fig. 9 in Explosionsdarstellung, wobei die Lage der in der Dosiervorrichtung befindlichen Luftklappen deutlich wird,
- Fig. 15: eine perspektivische Ansicht der Dosiervorrichtung mit den darin angeordneten Luftklappen, und
- Fig. 16: eine perspektivische Ansicht eines Luftausströmers von hin-ten auf die Dosiervorrichtung.

Einander entsprechende Teile sind in allen Figuren mit den gleichen Bezugszeichen versehen.

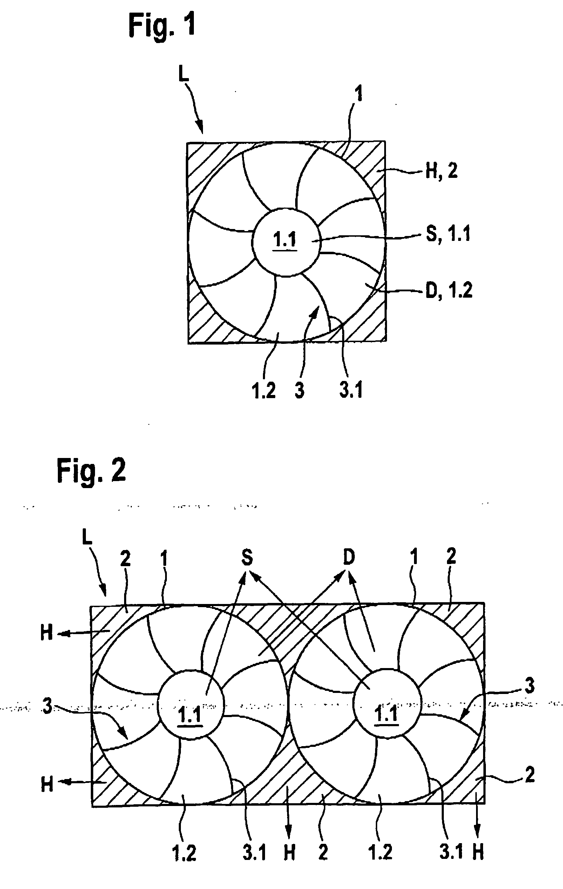

In Figur 1 ist eine mögliche Ausführungsform für einen Luftausströmer L gezeigt, der einen Luftführungskanal 1 mit einem inneren, zylinderförmigen Teilkanal 1.1 für einen spotförmigen Luftaustritt 1.1 und einem um diesen herum konzentrisch angeordneten Teilkanal 1.2 für den diffusen Luftaustritt D umfasst. Aufgrund des zumeist eine runde Außenkontur aufweisenden Luftführungskanals 1 und des eine kantige, z. B. rechteckige oder quadratische, Außenkontur aufweisenden Luftausströmers L ist der Luftführungskanal 1 zumindest teilweise von Hohlräumen 2 umgeben, die in der Figur 1 schraffiert dargestellt sind. In den Hohlräumen 2 kann dabei in Art eines zu den Teilkanälen 1.1 und 1.2 parallel verlaufenden Bypass-Kanals ein anteiliger Luftstrom H für einen diffusen Luftaustritt geführt werden.

Zur Verdrallung der aus dem Teilkanal 1.2 diffus austretenden Luftströmung D ist eine Luftleiteinrichtung 3 ein Schaufelkranz 3.1 im äußeren Teilkanal 1.2 angeordnet.

Je nach Art und Aufbau des Luftführungskanals 1 kann die Innenringwand des äußeren Teilkanals 1.2, der als Ringkanal ausgebildet ist, die Außenwand des innen liegenden oder inneren Teilkanals 1.1 bilden. Alternativ kann der jeweilige Teilkanal 1.1, 1.2 separat mit eigener Wandung ausgebildet sein. Aufgrund der unterschiedlichen Strömungsausgangsformen wird der innen liegende Teilkanal 1.1 auch als Spotkanal und der äußere Teilkanal 1.2 als Drallkanal bezeichnet.

Die Außenkontur des gezeigten Luftausströmers L ist quadratisch. Alternativ kann der Luftausströmer L auch eine beliebige andere geometrische Außenkontur aufweisen. Je nach Art und Einbauort des Luftausströmers L kann dessen Außenkontur durch ein zugehöriges Gehäuse oder durch die Wände der benachbarten Komponenten am Einbauort und somit durch den Einbauort gebildet sein.

Figur 2 zeigt eine alternative Ausführungsart eines Luftausströmers L. Hierbei umfasst der Luftausströmer L zwei Luftführungskanäle 1, die analog zum Luftausströmer L gemäß Figur 1 jeweils mehrere zugehörige Teilkanäle 1.1, 1.2 umfassen. Dabei weist jeder Luftführungskanal 1 einen äußeren Teilkanal 1.2 auf, in welchem jeweils als Luftleiteinrichtung 3 ein Schaufelkranz 3.1 angeordnet ist.

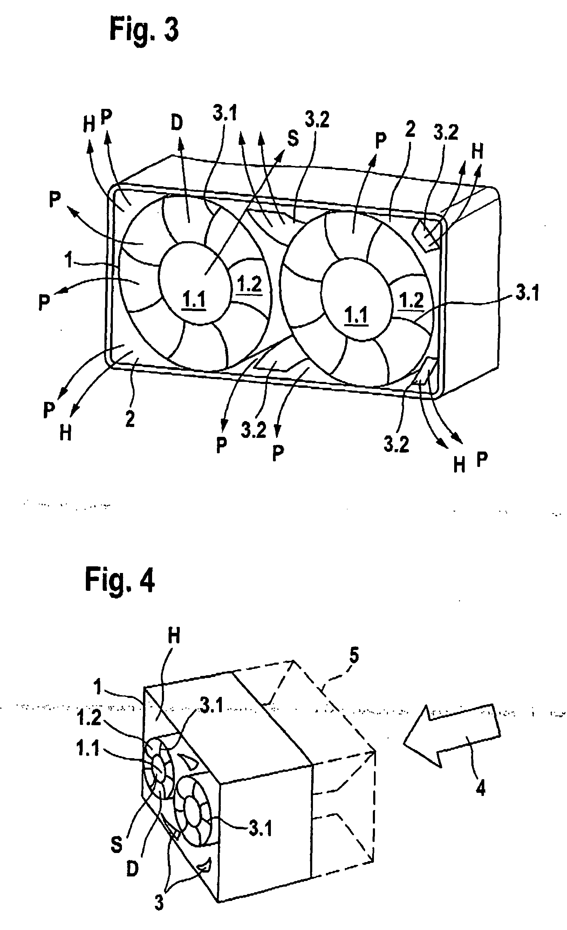

Figur 3 und 4 zeigen den Luftausströmer L gemäß Figur 2 in perspektivischer Ansicht. Zum Führen eines Luftstroms 4 durch den Luftausströmer L sind als Luftleiteinrichtungen 3 sowohl in den Hohlräumen 2 zugehörige Luftleitelemente 3.2 als auch in den äußeren Teilkanälen 1.2 Schaufelkränze 3.1 angeordnet, um die dort ausströmende Luft zielgerichtet abzuleiten, wie durch Pfeile P angedeutet ist. Die Luftleitelemente 3.2 weisen eine derartige Form auf, dass wie bei den Schaufelkränzen 3.1 ein diffuser Luftaustritt H bewirkt wird. Die Luftleiteinrichtungen 3 können je nach Vorgabe aus Gummi, Kunststoff oder Blech gebildet sein.

In Figur 4 ist eine Dosiervorrichtung 5 für den Luftausströmer L zum Zuführen eine den Luftführungskanal 1 durchströmenden Luftstroms 4 gezeigt. Die Dosiervorrichtühg: 5 dient der zielgerichteten Verteilung des Luftstromes 4 auf die Teilkanäle 1.1 und 1.2. Je nach Art und Aufbau des Luftausströmers L kann der in Art eines Bypasses in den Hohlräumen 2 geführte anteilige Luftstrom 4 über die Dosiervorrichtung 5 in die Hohlräume 2 geführt werden. Alternativ oder zusätzlich kann der anteilige Luftstrom 4 für die Hohlräume 2 aus dem äußeren Teilkanal 1.2 abgezweigt und in die Hohlräume 2 geführt werden. Hierzu ist der äußere Teilkanal 1.2, insbesondere dessen Wandung in nicht näher dargestellter Art und Weise beispielsweise bereichsweise perforiert ausgebildet oder mit entsprechenden Strömungsauslässen versehen.

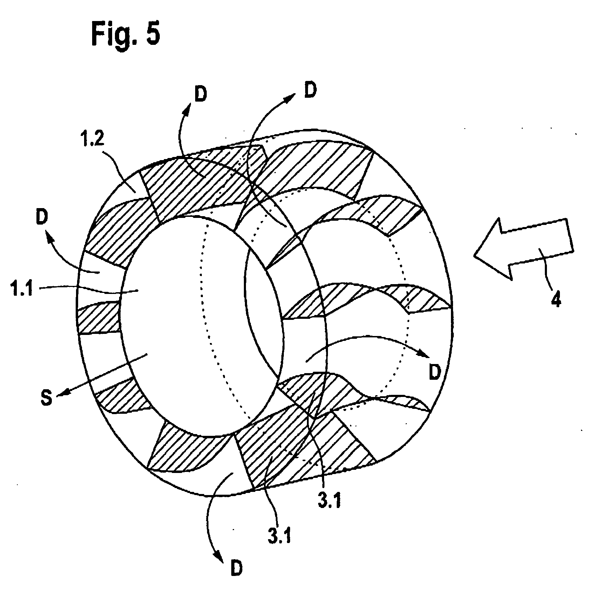

In Fig. 5 ist beispielhaft ein Schaufelkranz 3.1 als eine mögliche Variante für eine einteilige Luftleiteinrichtung 3 in einem äußeren Teilkanal 1.2 dargestellt. Der Luftstrom wird im Schaufelkranz 3.1 verdrallt und mit Rotation behaftet, was zu einem diffusen Luftaustritt führt. Der Schaufelkranz 3.1 umfasst hierzu beispielhaft eine Anzahl von sieben Schaufeln. Wie in der Figur 5 dargestellt, weisen die Schaufeln eine weitgehend gleiche Form auf. Sie sind parallel zueinander angeordnet und verlaufen in Strömungsrichtung gesehen spiral- oder wendelförmig und weisen im Wesentlichen eine gleichbleibende Dicke auf. Daher wird der Schaufelkranz 3.1 auch als ein Mehrfach-Helix bezeichnet. Je nach Vorgabe können die Schaufeln stationär in Art einer Leitschaufel ausgebildet sein. Dabei weisen die Schaufeln eine entsprechende Form auf, um die gewünschte Umlenkung und somit den Dralleffekt zu erzielen. Alternativ können die Schaufeln gedreht werden, so dass sowohl die durchtretende Strömungsmenge als auch der Grad der Umlenkung eingestellt werden kann.

Alternativ zum Schaufelkranz 3.1 können spiralförmige Einzelstränge in Art eines Helix vorgesehen sein. In der einfachsten Ausführungsform ist nur ein einziger spiralförmig verlaufender Einzelstrang vorgesehen; Zwei- oder Dreifach-Helixe können ebenfalls vorgesehen sein. Die Anzahl der Einzelstränge bestimmt dabei die Teilung des Drall- oder Teilkanals 1.2. Im Detail geben die Steigung und die Anzahl der Einzelstränge sowie der Umschlingungswinkel an, mit welchem Grad die Luftströmung 4 umgelenkt und somit verdrallt wird.

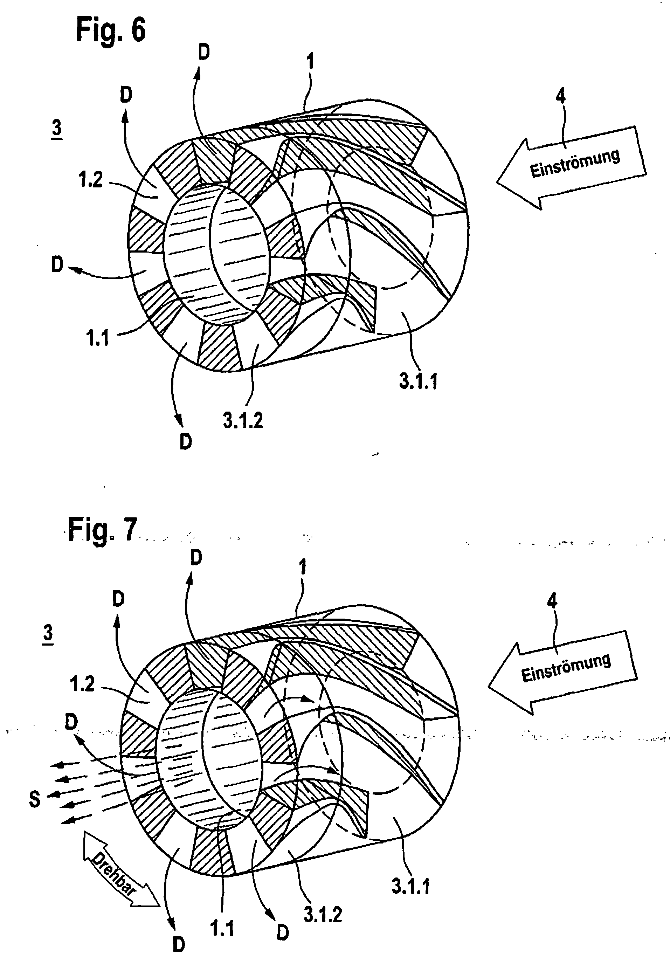

Figur 6 zeigt eine mehrteilige Luftleiteinrichtung 3. Zur Verlängerung des Drall- oder Teilkanals 1.2 ist einem ersten Schaufelkranz 3.1.1 ein zweiter Schaufelkranz 3.1.2 in Strömungsrichtung gesehen nachgeordnet. Der erste Schaufelkranz 3.1.1 weist eine Anzahl von dünnen und in etwa gleich bleibend dicken Schaufeln auf, die parallel zueinander angeordnet sind und eine Spiral- oder Wendelform aufweisen. Der zweite Schaufelkranz 3.1.2 weist eine der Schaufelanzahl des ersten Schaufelkranzes 3.1.1 entsprechende Schaufelanzahl auf. An der Grenze vom ersten Schaufelkranz 3.1.1 zum zweiten Schaufelkranz 3.1.2 liegen die Schaufeln aneinander an und bilden jeweils einen fortlaufenden spiral- oder wendelförmigen Einzelstrang. Die Schaufeln des zweiten Schaufelkranzes 3.1.2 weisen in Strömungsrichtung gesehen eine zunehmende Schaufeldicke auf.

Der zweite Schaufelkranz 3.1.2 ist dabei als ein separates Element ausgebildet, das als ein Erweiterungskanal auf dem Luftführungskanal 1 angeordnet ist.

In dem in Figur 7 dargestellten Ausführungsbeispiel ist der zweite Schaufelkranz 3.1.2 drehbar gelagert, wobei dieser in Art eines drehbaren Deckels auf dem Luftführungskanal 1 angeordnet ist und zwischen einer den äußeren Teilkanal 1.2 vollständig öffnenden Stellung und einer den äußeren Teilkanal 1.2 vollständig schließenden Stellung bewegt werden kann. In der Figur 7 steht der zweite Schaufelkranz 3.1.2 in der den Teilkanal 1.2 vollständig öffnenden Stellung, so dass ein diffuser Luftaustritt D ermöglicht ist. Zusätzlich kann über den inneren Teilkanal 1.1 ein spotförmiger Luftaustritt S geführt werden.

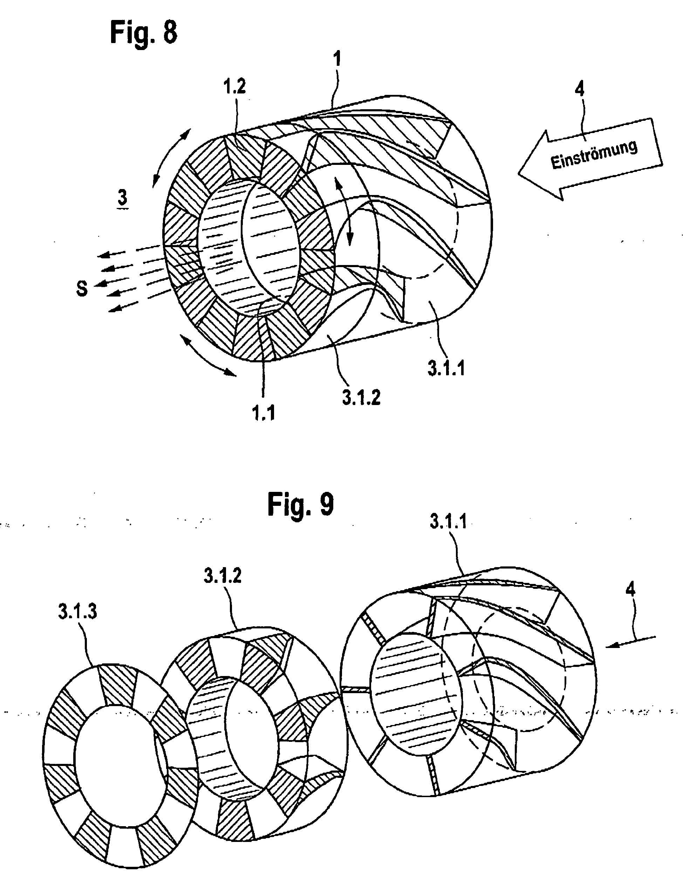

Figur 8 zeigt den zweiten Schaufelkranz 3.1.2 in der geschlossenen Stellung, so dass kein diffuser Luftaustritt ermöglicht ist.

Figur 9 zeigt die mehrteilige Luftleiteinrichtung 3 in Explosionsdarstellung mit den beiden Schaufelkränzen 3.1.1 und 3.1.2. Zusätzlich kann zum Schließen des äußeren Teilkanals 1.2 eine Blende 3.1.3 zum Schließen der Öffnungen zwischen den Schaufeln der Schaufelkränze 3.1.1 und 3.1.2 vorgesehen sein. In dieser Ausführungsform können die Schaufelkränze 3.1.1 und 3.1.2 als ein einziges Element, z.B. als ein Gussteil, insbesondere Kunststoff Spritzgussteil, gebildet sein. Die Blende 3.1.3 ist ein separates Bauteil, welches drehbar gelagert auf dem zweiten Schaufelkranz 3.1.2 angeordnet ist. Durch Drehen der Blende 3.1.3 können die Öffnungen zwischen den Schaufeln der Schaufelkränze 3.1.2 und 3.1.1 und somit der äußere Teilkanal 1.2 geschlossen werden.

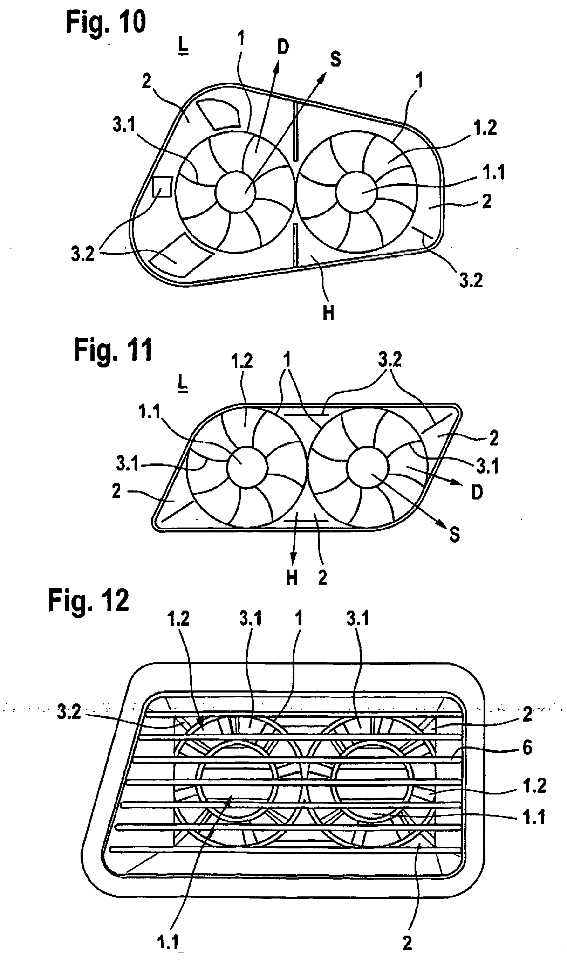

In den Figuren 10 und 11 sind alternative Ausführungsformen für Luftausströmer L gezeigt, die sich von der in Fig. 3 gezeigten jedoch nur durch ihre Außenkonturen unterscheiden. Die Funktion bleibt unverändert.

Fig. 12 zeigt einen Luftausströmer L gemäß Fig. 3 mit einer lamallenförmigen. Vorrichtung 6 zur Einstellung der Richtung des austretenden Luftstromes, so dass dieser gezielt in bestimmte Bereiche des Innenraumes gelenkt werden kann.

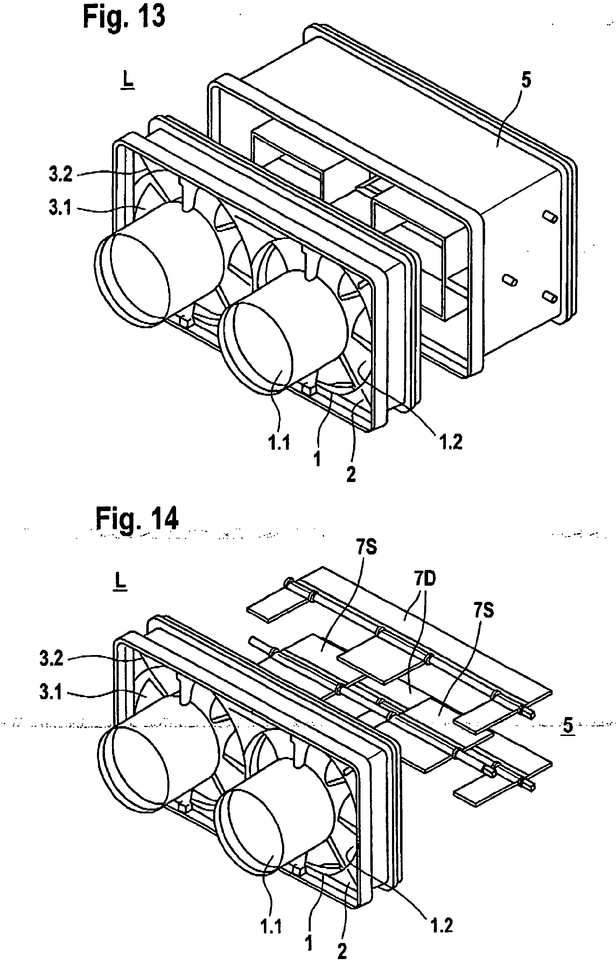

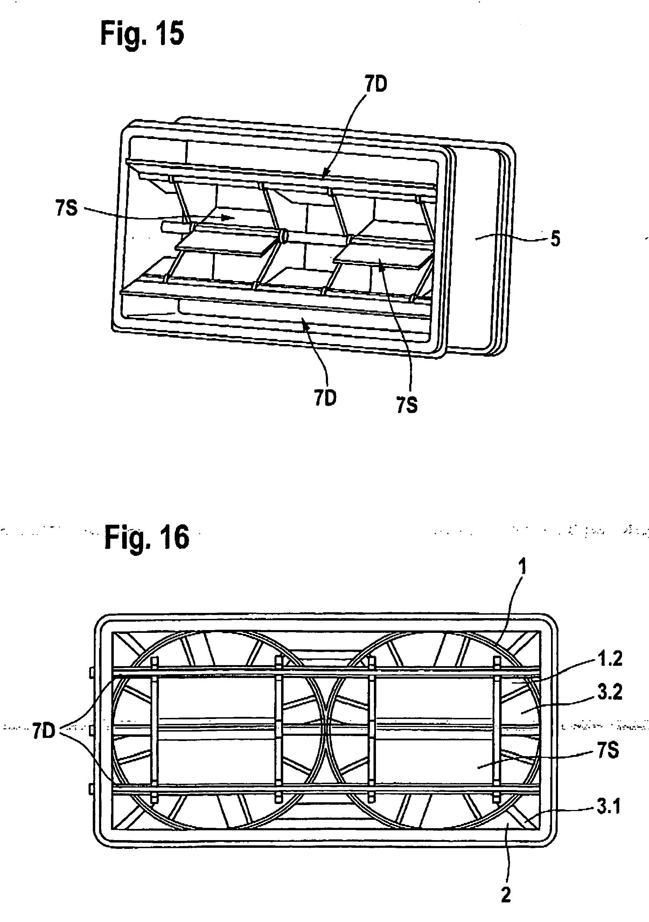

In Fig. 13 ist ein Luftausströmer L gemäß Fig. 3 mit einer Dosiervorrichtung 5 dargestellt. Diese ist in der Darstellung zur Verdeutlichung der Funktion vom Luftausströmer L abgezogen. Die Dosiervorrichtung 5 ist mit Luftklappen 7D und 7S versehen, wie in Fig. 14 dargestellt. Dabei wird mit der Luftklappe 7D der Luftstrom im Teilkanal 1.2 und mit der Luftklappe 7S der Luftstrom im Teilkanal 7D gesteuert. Die Form der Luftklappen 7S bedingt eine rechteckige Form ihres umgebenden Luftkanals in der Dosiervorrichtung 5. Fig. 15 verdeutlicht noch einmal die Lage der Lage der Luftklappen 7D und 7S in der Dosiervorrichtung 5. Fig. 16 zeigt eine Ansicht von hinten auf den Luftausströmer L, insbesondere auf die Dosiervorrichtung 5.

## Patentansprüche

1. Luftausströmer (L), insbesondere für ein Kraftfahrzeug mit mindestens einem Luftführungskanal (1) zum Führen eines Luftstroms (4), wobei der Luftführungskanal (1) mindestens zwei, parallel zueinander angeordnete Teilkanäle (1.1, 1.2) umfasst und einer der Teilkanäle (1.2) als äußerer Teilkanal um einen inneren Teilkanal (1.1) angeordnet ist, wobei der äußere Teilkanal (1.2) strömungsausgangsseitig mit mindestens einer eine Verdrallung des ausströmenden Luftstroms bewirkenden Luftleiteinrichtung (3) versehen ist, die zumindest einen ersten Schaufelkranz (3.1, 3.1.1, 3.1.2) und in Strömungsrichtung entlang der Längsachse des äußeren Teilkanals (1.2) nachgeordnet einen zweiten Schaufelkranz (3.1.2) umfasst, **dadurch gekennzeichnet, dass** der zweite Schaufelkranz (3.1.2) eine Anzahl von wendel- oder spiralförmig und parallel zueinander verlaufenden Schaufeln aufweist, deren Außenabmessungen in Strömungsrichtung gesehen zunehmen.

2. Luftausströmer (L) nach Anspruch 1, **dadurch gekennzeichnet, dass** die Luftleiteinrichtung (3) mehrteilig ausgebildet ist.

3. Luftausströmer (L) nach einem der Ansprüche 1 bis 2, wobei der erste Schaufelkranz (3.1.1 eine Anzahl von wendel- oder spiralförmig und parallel zueinander verlaufenden Schaufeln aufweist.

4. Luftausströmer (L) nach einem der Ansprüche 1 bis 3, wobei der zweite Schaufelkranz (3.1.2) eine der Schaufelanzahl des ersten Schaufelkranzes (3.1.1) entsprechende Anzahl von Schaufeln aufweist, wobei die jeweiligen Schaufeln an der benachbarten Grenze vom ersten Schaufelkranz (3.1.1) zum zweiten Schaufelkranz (3.1.2) aneinander anliegen.

5. Luftausströmer (L) nach einem der Ansprüche 1 bis 4, wobei der zweite Schaufelkranz (3.1.2) als ein separater Erweiterungskanal ausgebildet ist, der auf dem Luftführungskanal (1) beweglich, insbesondere drehbar angeordnet ist.

6. Luftausströmer (L) nach einem der Ansprüche 1 bis 5, wobei zum Schließen des äußeren Teilkanals (1.2) eine Blende (3.1.3), die als ein separates drehbares Bauteil gebildet ist, vorgesehen ist.

7. Luftausströmer (L) nach einem der Ansprüche 1 bis 6, **dadurch gekennzeichnet, dass** der jeweilige Schaufelkranz (3.1, 3.1.1, 3.1.2) eine vorgegebene Anzahl von festen oder in ihrer Position verstellbaren Schaufeln umfasst.

8. Luftausströmer (L) nach einem der Ansprüche 1 bis 7, **dadurch gekennzeichnet, dass** mehrere Luftführungskanäle (1) parallel zueinander angeordnet sind, wobei strömungsausgangsseitig der jeweilige äußere Teilkanal (1.2) mit einem oder mehreren zugehörigen Schaufelkranz (3.1, 3.1.1, 3.1.2) versehen ist, die synchron oder asynchron hinsichtlich ihrer Stellung steuerbar sind.

9. Luftausströmer (L) nach einem der Ansprüche 1 bis 8, **dadurch gekennzeichnet, dass** die Luftleiteinrichtung (3) aus Blech, Kunststoff oder Gummi ausgeführt ist.

10. Luftausströmer (L) nach einem der Ansprüche 1 bis 9, **dadurch gekennzeichnet, dass** mindestens einer der Teilkanäle (1.1, 1.2) im Wesentlichen zylinderförmig ist.

11. Luftausströmer (L) nach einem der Ansprüche 1 bis 10, **dadurch gekennzeichnet, dass** einer der Teilkanäle (1.1) zylinderförmig ausgebildet ist und ein weiterer Teilkanal (1.2) in Art eines Ringkanals um den zylinderförmigen Teilkanal (1.1) angeordnet ist.

12. Luftausströmer (L) nach einem der Ansprüche 1 bis 11, **dadurch gekennzeichnet, dass** mindestens ein Teilkanal (1.1) konzentrisch in mindestens einem weiteren Teilkanal (1.2) angeordnet ist.

13. Luftausströmer (L) nach einem der Ansprüche 1 bis 12, **dadurch gekennzeichnet, dass** strömungseingangsseitig eine Dosiervorrichtung (5) angeordnet ist, die derart ausgebildet ist, dass die den einzelnen Teilkanälen (1.1, 1.2) zuführbare Luft steuerbar ist.

14. Luftausströmer (L) nach einem der Ansprüche 1 bis 14, **dadurch gekennzeichnet, dass** strömungsausgangsseitig eine Vorrichtung (6) zur Einstellung der Richtung des ausströmenden Luftstroms (4) aus einem oder mehreren Teilkanälen (1.1, 1.2) angeordnet ist.

15. Luftausströmer (L) nach Anspruch 13 oder 14, **dadurch gekennzeichnet, dass** die Dosiervorrichtung (5) mindestens eine Luftklappe (7D, 7S) umfasst.

16. Verfahren zur Steuerung einer Luftströmung (4) in einem Luftführungskanal (1) eines Luftausströmers (L) nach einem der Ansprüche 1 bis 15, **dadurch gekennzeichnet, dass** einer der Teilkanäle (1.1, 1.2) als äußerer Teilkanal (1.2) um einen inneren Teilkanal (1.1) angeordnet ist, wobei die Luftströmung (4) im äußeren Teilkanal (1.2) strömungsausgangsseitig in Querrichtung zur Längsachse des Teilkanals (1.2) umgelenkt und eine Verdrallung des ausströmenden Luftstroms bewirkt wird, wobei in Strömungsrichtung gesehen mindestens zwei als Schaufelkränze (3.1, 3.1.1, 3.1.2) ausgebildete Luftleiteinrichtungen (3) vorgesehen sind, **dadurch gekennzeichnet, dass** eine Blende (3.1.3), die als ein separates drehbares Bauteil gebildet ist, in eine den äußeren Teilkanal (1.2) vollständig öffnenden und in eine den äußeren Teilkanal vollständig schließenden Stellung oder in eine beliebige Zwischenstellung gebracht wird.

17. Verfahren nach Anspruch 16, **dadurch gekennzeichnet, dass** der Luftführungskanal (1) mindestens zwei Teilkanäle (1.1, 1.2) umfasst, wobei durch den inneren Teilkanal (1.1) der Luftstrom gleichförmig gerichtet, strahlförmig und durch den äußeren Teilkanal (1.2) verdrallt oder mit Turbulenzen behaftet geführt wird.

18. Belüftungssystem für ein Kraftfahrzeug mit mindestens einem Luftausströmer (L) nach einem der Ansprüche 1 bis 15.

## Claims

1. Air nozzle (L), in particular for a motor vehicle, with at least one air duct (1) for passing an air flow (4), the air duct (1) comprising two part-ducts (1.1, 1.2) arranged parallel to one another, one of the part-ducts (1.2) being arranged as an outer part-duct around an inner part-duct (1.1), the outer part-duct (1.2) being provided on the flow outlet side with at least one air guiding device (3) that produces a swirling movement of the emerging air flow, the said device comprising a first vane ring (3.1, 3.1.1, 3.1.2) and, downstream in the flow direction along the longitudinal axis of the outer part-duct (1.2), a second vane ring (3.1.2), **characterised in that** the second vane ring (3.1.2) comprises a plurality of helical or spiral-shaped and mutually parallel vanes whose outer dimensions increase as viewed in the flow direction.

2. Air nozzle (L) according to Claim 1, **characterised in that** the air guiding device (3) is made in several parts.

3. Air nozzle (L) according to Claim1 or 2, **such that** the first vane ring (3.1.1) comprises a plurality of helical or spiral-shaped and mutually parallel vanes.

4. Air nozzle (L) according to any of Claims 1 to 3, **such that** the second vane ring (3.1.2) has a plurality of vanes corresponding to the number of vanes of the first vane ring (3.1.1), and the respective vanes are in contact with one another at the adjacent boundary from the first vane ring (3.1.1) to the second vane ring (3.1.2).

5. Air nozzle (L) according to any of Claims 1 to 4, **such that** the second vane ring (3.1.2) is made as a separate extension duct arranged to move and in particular to rotate on the air duct (1).

6. Air nozzle (L) according to any of Claims 1 to 5, **such that** a screen (3.1.3) formed as a separate rotating component is provided for closing the outer part-duct (1.2).

7. Air nozzle (L) according to any of Claims 1 to 6, **characterised in that** each vane ring (3.1, 3.1.1, 3.1.2) has a specified number of fixed vanes or vanes whose position can be adjusted.

8. Air nozzle (L) according to any of Claims 1 to 7, **characterised in that** a plurality of air ducts (1) are arranged parallel to one another, the respective outer part-ducts (1.2) on the flow outlet side being provided with one or more associated vane rings (3.1, 3.1.1, 3.1.2) whose positions can be controlled synchronously or asynchronously.

9. Air nozzle (L) according to any of Claims 1 to 8, **characterised in that** the air guiding device (3) is made of sheet metal, plastic or rubber.

10. Air nozzle (L) according to any of Claims 1 to 9, **characterised in that** at least one of the part-ducts (1.1, 1.2) is substantially cylindrical in shape.

11. Air nozzle (L) according to any of Claims 1 to 10, **characterised in that** one part-duct (1.1) is of cylindrical shape and a further part-duct (1.2) is arranged in the manner of an annular duct around the cylindrical part-duct (1.1).

12. Air nozzle (L) according to any of Claims 1 to 11, **characterised in that** at least one part-duct (1.1) is arranged concentrically in at least one further part-duct (1.2).

13. Air nozzle (L) according to any of Claims 1 to 12, **characterised in that** a metering device (5) is arranged on the flow inlet side, which is formed in such manner that the air passing into the individual part-ducts (1.1, 1.2) can be controlled.

14. Air nozzle (L) according to any of Claims 1 to 13, **characterised in that** on the flow outlet side a device (6) for adjusting the direction of the air flow (4) emerging from one or more part-ducts (1.1, 1.2) is arranged.

15. Air nozzle (L) according to Claims 13 or 14, **characterised in that** the metering device (5) comprises at least one air shutter (7D, 7S).

16. Method for controlling an air flow (4) in an air duct (1) of an air nozzle (L) according to any of Claims 1 to 15, **characterised in that** one of the part-ducts (1.1, 1.2) is arranged as an outer part-duct (1.2) around an inner part-duct (1.1), such that the air flow (4) in the outer part-duct (1.2) is deflected at the flow outlet side transversely to the longitudinal axis of the part-duct (1.2) to produce a swirling movement of the emerging air flow, such that viewed in the flow direction at least two air guiding devices (3) formed as vane rings (3.1, 3.1.1, 3.1.2) are provided, **characterised in that** a screen (3.1.3) formed as a separate rotating component can be brought to a position which completely opens the outer part-duct (1.2) or to a position which completely closes it, or to any intermediate position.

17. Method according to Claim 16, **characterised in that** the air duct (1) comprises at least two part-ducts (1.1, 1.2), such that the air flow passes through the inner part-duct (1.1) in a uniform, directed manner and through the outer part-duct (1.2) with a swirling or turbulent movement.

18. Ventilation system for a motor vehicle, with at least one air nozzle (L) according to any of Claims 1 to 15.

## Revendications

1. Buse d'air (L), en particulier pour un véhicule automobile, comprenant au moins un conduit de guidage d'air (1) servant à guider un flux d'air (4), où le conduit de guidage d'air (1) comprend au moins deux conduits partiels (1.1, 1.2) disposés parallèlement l'un à l'autre, et l'un des conduits partiels (1.2) est disposé comme un conduit partiel extérieur autour d'un conduit partiel intérieur (1.1), où le conduit partiel extérieur (1.2) est doté, côté sortie d'écoulement, d'au moins un dispositif déflecteur d'air (3) provoquant un tourbillonnement du flux d'air sortant, dispositif déflecteur d'air qui comprend au moins une première couronne d'aubes (3.1, 3.1.1, 3.1.2), et une deuxième couronne d'aubes (3.1.2) disposée en aval, le long de l'axe longitudinal du conduit partiel extérieur (1.2), dans la direction de l'écoulement, **caractérisée en ce que** la deuxième couronne d'aubes (3.1.2) présente un certain nombre d'aubes, en forme d'hélice ou de spirale, et s'étendant parallèlement les unes aux autres, aubes dont les dimensions extérieures, vues dans la direction de l'écoulement, augmentent.

2. Buse d'air (L) selon la revendication 1, **caractérisée en ce que** le dispositif déflecteur d'air (3) est conçu en plusieurs parties.

3. Buse d'air (L) selon l'une ou l'autre des revendications 1 et 2, où la première couronne d'aubes (3.1.1) présente un certain nombre d'aubes en forme d'hélice ou de spirale et s'étendant parallèlement les unes aux autres.

4. Buse d'air (L) selon l'une quelconque des revendications 1 à 3, où la deuxième couronne d'aubes (3.1.2) présente un nombre d'aubes correspondant au nombre d'aubes de la première couronne d'aubes (3.1.1), où les aubes respectives sont contiguës entre elles, au niveau de la limite voisine entre la première couronne d'aubes (3.1.1) et la deuxième couronne d'aubes (3.1.2).

5. Buse d'air (L) selon l'une quelconque des revendications 1 à 4, où la deuxième couronne d'aubes (3.1.2) est conçue comme un conduit d'élargissement séparé qui est disposé sur le conduit de guidage d'air (1), en étant mobile, en particulier rotatif.

6. Buse d'air (L) selon l'une quelconque des revendications 1 à 5, où, pour la fermeture du conduit partiel extérieur (1.2), il est prévu un obturateur (3.1.3) qui est formé comme un composant rotatif séparé.

7. Buse d'air (L) selon l'une quelconque des revendications 1 à 6, **caractérisée en ce que** la couronne d'aubes respective (3.1, 3.1.1, 3.1.2) comporte un nombre prédéfini d'aubes fixes ou réglables dans leur position.

8. Buse d'air (L) selon l'une quelconque des revendications 1 à 7, **caractérisée en ce que** plusieurs conduits de guidage d'air (1) sont disposés parallèlement les uns aux autres, où, côté sortie d'écoulement, le conduit partiel extérieur respectif (1.2) est doté d'une ou de plusieurs couronnes d'aubes associées (3.1, 3.1.1, 3.1.2) qui peuvent être commandées de façon synchrone ou asynchrone concernant leur position.

9. Buse d'air (L) selon l'une quelconque des revendications 1 à 8, **caractérisée en ce que** le dispositif déflecteur d'air (3) est réalisé en tôle, en matière plastique ou en caoutchouc.

10. Buse d'air (L) selon l'une quelconque des revendications 1 à 9, **caractérisée en ce qu'**au moins l'un des conduits partiels (1.1, 1.2) est sensiblement en forme de cylindre.

11. Buse d'air (L) selon l'une quelconque des revendications 1 à 10, **caractérisée en ce que** l'un des conduits partiels (1.1) est configuré en forme de cylindre, et qu'un autre conduit partiel (1.2), à la façon d'un conduit annulaire, est disposé autour du conduit partiel (1.1) en forme de cylindre.

12. Buse d'air (L) selon l'une quelconque des revendications 1 à 11, **caractérisée en ce qu'**au moins un conduit partiel (1.1) est disposé de façon concentrique dans au moins un autre conduit partiel (1.2).

13. Buse d'air (L) selon l'une quelconque des revendications 1 à 12, **caractérisée en ce qu'**un dispositif de dosage (5) est disposé côté entrée d'écoulement, dispositif de dosage qui est conçu de manière telle, que l'air pouvant être fourni aux différents conduits partiels (1.1, 1.2) puisse être régulé.

14. Buse d'air (L) selon l'une quelconque des revendications 1 à 13, **caractérisée en ce qu'**un dispositif (6) servant au réglage de la direction du flux d'air (4) sortant d'un ou de plusieurs conduits partiels (1.1, 1.2) est disposé côté sortie d'écoulement.

15. Buse d'air (L) selon la revendication 13 ou 14, **caractérisée en ce que** le dispositif de dosage (5) comporte au moins un volet d'air (7D, 7S).

16. Procédé de régulation d'un écoulement d'air (4) dans un conduit de guidage d'air (1) d'une buse d'air (L) selon l'une quelconque des revendications 1 à 15, **caractérisé en ce que** l'un des conduits partiels (1.1, 1.2) est disposé comme un conduit partiel extérieur (1.2) autour d'un conduit partiel intérieur (1.1), où l'écoulement d'air (4), côté sortie d'écoulement, est dévié dans le conduit partiel extérieur (1.2), dans une direction transversale par rapport à l'axe longitudinal du conduit partiel (1.2), et un tourbillonnement du flux d'air sortant est provoqué, où il prévu, vus dans la direction de l'écoulement, au moins deux dispositifs déflecteurs d'air (3) conçus comme des couronnes d'aubes (3.1, 3.1.1, 3.1.2), **caractérisé en ce qu'**un obturateur (3.1.3), qui est formé comme un composant rotatif séparé, est placé dans une position ouvrant complètement le conduit partiel extérieur (1.2) et dans une position fermant complètement le conduit partiel extérieur, ou bien dans une position intermédiaire quelconque.

17. Procédé selon la revendication 16, **caractérisé en ce que** le conduit de guidage d'air (1) comporte au moins deux conduits partiels (1.1, 1.2), où le flux d'air, à travers le conduit partiel intérieur (1.1), est dirigé de façon uniforme, en forme de jet, et, à travers le conduit partiel extérieur (1.2), est guidé de façon tourbillonnaire ou en subissant des turbulences.

18. Système de ventilation pour un véhicule automobile, comprenant au moins une buse d'air (L) selon l'une quelconque des revendications 1 à 15.
